# EUROPEAN PATENT SPECIFICATION

(11) **EP 0 675 059 B1**
(45) Date of publication and mention of the grant of the patent: **17.06.1998**
(21) Application number: 95302204.3
(22) Date of filing: 31.03.1995
(51) Int. Cl.: B65G 1/133

(54) **Storage apparatus**
Lagereinrichtung
Dispositif d'entreposage

(30) Priority: 31.03.1994 JP 85807/94; 29.07.1994 JP 197960/94; 06.10.1994 JP 270219/94
(43) Date of publication of application: 04.10.1995
(73) Proprietor: Niimura, Masateru, Ohtas-ku, Tokyo (JP)
(72) Inventor: Niimura, Masateru, Ohtas-ku, Tokyo (JP)
(74) Representative: Price, Paul Anthony King

(56) References cited:
- EP-A- 0 276 409
- DE-A- 3 913 651
- US-A- 4 561 820
- US-A- 4 966 513

## Description

The present invention relates to storage apparatus which may be used as or in multi-tier parking lots for bicycles, distribution warehouses and under-the-floor storage apparatuses.

In recent years, in parking lots for bicycles and automobiles and in distribution warehouses as well as under-the-floor storage apparatuses in kitchens, a variety of apparatuses are being used to store many bicycles, vehicles and goods in a limited storage space.

In the case of parking lots for bicycles and cars and distribution warehouses, such a storage apparatus generally has a crane installed above it to carry and put objects at specified locations in a range of three-dimensional space where the crane can reach. The crane is also used for carrying objects out of the storage apparatus.

The above-mentioned conventional storage apparatus, however, has a very complicated mechanism and is expensive. Another drawback is that the storage apparatus itself occupies a relatively large volume of space, so that it is difficult to make an efficient utilization of a limited space available for storage.

The conventional under-the-floor storage apparatuses generally have a storage capacity for accommodating only one storage box with an inlet/outlet port facing an opening in the floor and thus cannot fully utilize the available space under the floor.

US-A-3860130 discloses storage apparatus in accordance with the preamble portion of claim 1.

According to the present invention, there is provided storage apparatus comprising: a rectangular frame body; storage boxes movable relative to the frame body along a path which follows the periphery of the frame body, at least three such storage boxes being installed in the frame body; a flexible drive member positioned adjacent to the storage boxes; a space provided at a location along the path and capable of accommodating one storage box; and drive means for driving the drive member to move the storage boxes along the path: characterized in that the flexible drive member is endless and is positioned along the frame body, and in that the apparatus further comprises: magnets fixed to the drive member so as to face the storage boxes, the magnets being arranged in such a way that at least one magnet is adjacent to each storage box; and magnetic components fixed to the storage boxes so as to face the magnets so that the magnetic components and the magnets may attract each other.

Preferably, rotatable members are incorporated in the magnets so as to face the storage boxes.

Preferably, the magnets and/or the magnetic components are electromagnets.

Preferably, demagnetizing members are arranged at the four corners of the frame body for separating the magnets from the magnetic components.

The storage apparatus with the above construction can be used as a parking lot for bicycles or automobiles or as a distribution warehouse. When installed horizontally under the floor, the apparatus can function as an economical under-the-floor storage apparatus which has a large storage capacity and a low running cost.

In the preferred embodiment, the magnetic components are magnetic plates and the flexible endless drive member is a chain which is guided around the four corners of the frame body by sprockets.

The storage apparatus may employ a construction in which a total of, say, five storage boxes are arranged in three rows and two columns in the frame body with a space capable of accommodating one storage box provided in the frame body. One column consists of three boxes and the other two boxes. In this condition, the sprockets are rotated by a drive unit, e.g. a motor, to move the chain. By the action of the magnets, the storage boxes are pulled in the direction of movement of the chain. Because the farthest storage box in the three-box column has a vacant space adjacent to it in the direction of chain motion, it can be transferred to the space location as the chain moves.

During the process of box transfer, other storage boxes remain at their positions against the action of the magnets. After this, a space is formed on the opposite side of the moved storage box. When the chain is driven further, two storage boxes in this column are moved up, thus forming a new space beneath them. In this way, a space is formed at one location after another, allowing the storage boxes to be moved along the frame body.

Storage boxes other than the one that can be moved toward the space remain at their positions even when the chain is being driven. At this time, the rotatable members roll to alleviate the load of the storage boxes that resist the pulling action of the magnets. Furthermore, if one or both of the magnet and the magnetic plate is formed of an electromagnet, it is possible to adjust the magnetic force according to the weight of the storage box.

Further, by installing demagnetizing members at four corners of the frame body, it is possible to separate the magnets easily from the storage boxes at the corners of the frame body and therefore to perform the transfer of the storage boxes smoothly with a small force.

### BRIEF DESCRIPTION OF THE DRAWINGS

Figure 1(a) is a plan view and 1(b) a front view, both showing the configuration of a first embodiment of this invention as applied to a multi-tier parking lot for bicycles;

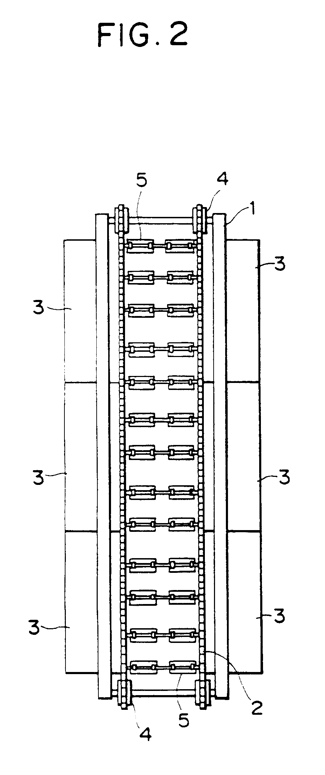

Figure 2 is a side view of the multi-tier parking lot for bicycles;
Figure 3(a) is a front view and 3(b) a side view, both showing a portion where the magnet fixed to the chain interacts with the magnetic plate provided on the outer circumferential surface of the bicycle storage box;
Figure 4(a) is a plan view and 4(b) a front view, both showing the configuration of a second embodiment of this invention as applied to a multi-tier parking lot for bicycles;
Figure 5 is a side view of the multi-tier parking lot for bicycles of the second embodiment;
Figure 6 is a plan view of a third embodiment of this invention as applied to an under-the-floor storage apparatus;
Figure 7 is a cross section of the under-the-floor storage apparatus;
Figure 8 is a plan view of the under-the-floor storage apparatus; and
Figure 9 is a front view of the under-the-floor storage apparatus.

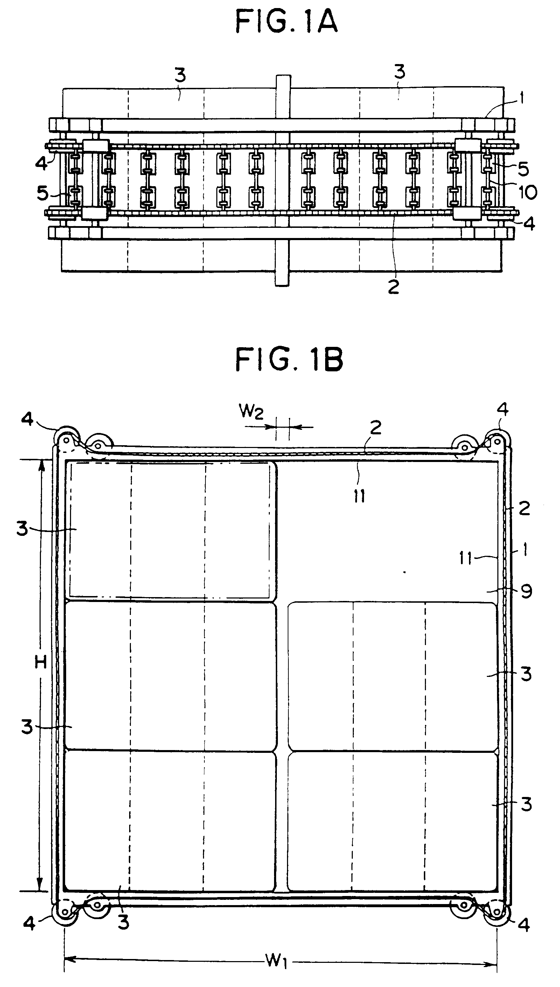

Figure 1 shows a first embodiment in which the storage apparatus of this invention is applied to a multi-tier bicycle parking lot. The multi-tier bicycle parking lot comprises a frame body ***1*** which is rectangular in shape. Inside the frame body ***1*** is installed a rail ***11*** running along the frame body ***1***.

Inside the frame body ***1***, there are two columns of bicycle storage boxes ***3*** capable of accommodating three bicycles each. Each column consists of three or two storage boxes stacked one upon the other. Above the two-tier column there is a space ***9*** large enough to accommodate one bicycle storage box ***3***. A chain ***2*** is laid along the frame body ***1***.

The chain ***2*** consists, as shown in Figure 1, of two rows of chain spaced a specified distance from each other. At the left- and right-hand side of the top and bottom surfaces of the frame body ***1***, there are provided sprockets ***4*** that change the direction of motion of the chain ***2*** and ensure correct transport of the chain ***2*** along the frame body ***1***.

Further, in this embodiment, platelike magnets ***5*** (permanent magnets) are secured to the end portions of horizontal connecting bars ***10*** that connect the two rows of chain. The connecting bars ***10*** are arranged over the entire length of the chain ***2*** at specified intervals. In this embodiment, the interval between the connecting bars ***10*** is such that there are four to five bars along the shorter side of a bicycle storage box ***3*** and six bars ***10*** along the longer side of the bicycle storage box ***3***.

On the outer circumferential surface of the bicycle storage boxes ***3***, there are arranged magnetic plates ***7*** made of magnetic material such as iron at positions facing the magnets ***5***. It is of course possible to form the entire outer circumferential surface of the bicycle storage box ***3*** as an iron plate.

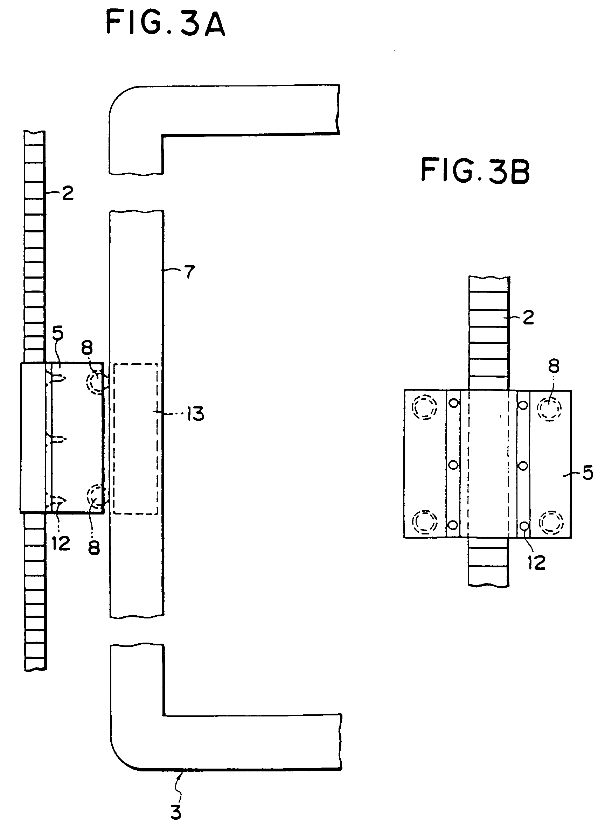

Figure 3 shows the detail of a portion where the magnet ***5*** attached to the chain ***2*** comes close to the magnetic plate ***7*** that forms the side surface of the bicycle storage box ***3*** facing the chain ***2***.

The magnet ***5*** is fixed to the chain ***2*** by bolts ***12***. At each corner of a surface of the magnet ***5*** that is close to the magnetic plate ***7***, a rotating member ***8*** such as a ball is partly embedded in the magnet ***5***. The similar construction also applies to the magnetic plates ***7*** and the magnets ***5*** provided to the top and bottom surfaces of the bicycle storage box ***3*** that face the chain ***3***.

The rotating member ***8***, though effective for assuring a smooth sliding between the magnet ***5*** and the magnetic plate ***7***, is not necessarily a requirement in terms of construction. A smooth film may be used in place of the rotating member ***8***.

The rotating member ***8*** forms a gap of about 0.1-0.3 mm between the surface of the magnet ***5*** and the magnetic plate ***7***. Although the rotating member ***8*** is spherical in this embodiment, it may be a cylindrical roller. The material for the rotating member ***8*** may be ceramic coated with a fluoride resin or covered with a film.

Inside the frame body ***1*** are provided a total of five bicycle storage boxes ***3*** and a space ***9*** equal in volume to one bicycle storage box ***3***. The bicycle storage boxes ***3*** are kept independent of each other. Hence, as long as the space ***9*** is formed in the direction of movement of a bicycle storage box ***3***, the bicycle storage box ***3*** can be moved vertically or horizontally toward the space ***9*** by moving the chain ***2***.

Next, how the bicycle storage boxes ***3*** are moved in the above-mentioned storage apparatus is explained. First, a drive source (not shown) such as a motor is started to move the chain ***2***. Then, all the magnets ***5*** fixed to this chain ***2*** start to move. The magnets ***5*** attract, by magnetic force, the bicycle storage box ***3*** that they face, and the bicycle storage box ***3*** is acted upon by a force that causes the box ***3*** to move in the direction of the chain ***2*** motion.

When other bicycle storage box ***3*** lies in the direction of movement of a target bicycle storage box ***3***, the target box ***3*** cannot be moved. In this case, the magnets ***5*** with the rotating members ***8*** slide over a wall surface including the surface of the magnetic plate ***7*** of the bicycle storage box ***3***. Among possible drive sources is one that moves the chain ***2*** by manual force using a force multiplying mechanism or one that is started automatically by inserting a coin. A switch mechanism may also be provided to allow an arbitrary bicycle storage box ***3*** to be moved to a bicycle inlet/outlet.

Suppose, for example, the space ***9*** is located at the top of the right-hand side column in the frame body ***1***, as shown in Figure 1. As the chain ***2*** starts moving (in a clockwise direction), the top bicycle storage box ***3*** on the left-hand side is moved by the action of magnetic force toward the space ***9*** on the right.

At this time, other bicycle storage boxes ***3*** are held immovable, so that the magnets ***5*** carried by the chain ***2*** slide through the rotating members ***8*** over the wall surface of the bicycle storage boxes. When the top bicycle storage box ***3*** on the left side is completely transferred to the space ***9***, a space ***9*** is formed where the top bicycle storage box ***3*** on the left side was. Then, by the magnetic force of the magnets ***5***, the bicycle storage boxes ***3*** at intermediate and bottom tiers on the left side are lifted upward as the chain ***2*** is driven.

In this way, a space is formed at one location after another and the bicycle storage box ***3*** is moved to fill the space. The bicycle storage boxes ***3*** are circulated in the frame body ***1*** along with the chain ***2***. They are moved in the following order.
(1) A bicycle storage box ***3*** at the top tier on the left-hand side moves to the space ***9*** on the right.
(2) Bicycle storage boxes ***3*** at the intermediate and bottom tiers on the left-hand side move upward.
(3) A bicycle storage box ***3*** at the bottom tier on the right moves toward the left.
(4) The bicycle storage box ***3*** of (1) that has moved to the top tier on the right moves down, together with the box 3 of the intermediate tier.

The above sequence of motion is repeated.

The bicycle storage boxes ***3*** can be moved to any desired position by the circulating motion of the chain ***2*** and, with the bicycle storage box ***3*** situated at the bottom of the frame body ***1***, a bicycle can be put into or taken out of the storage box.

The vertical length ***H*** of the frame body ***1*** is equal to the height of the bicycle storage box ***3*** times 3 (tiers) plus the small width of the frame body ***1***. The lateral length ***W1*** is equal to the lateral width of the bicycle storage box ***3*** times 2 (columns) plus the small width of the frame body ***1*** and a gap ***W2*** between the bicycle storage boxes ***3***. The apparatus as a whole has no redundant space.

The magnets ***5*** used in the storage apparatus need to have a load carrying capacity compatible with the weight of the bicycle storage box ***3***. For an increased load carrying capacity, the magnetic attraction may be increased or the area of the magnet ***5*** facing the bicycle storage box ***3*** may be enlarged.

While the above embodiment uses a permanent magnet for the magnet ***5***, it is possible to use an electromagnet. Although the circumferential surface of the bicycle storage box ***3*** is provided with the magnetic plates ***7*** made from magnetic material such as iron, an electromagnet ***13*** or a magnet ***5*** (permanent magnet) may be used instead. The use of the electromagnet ***13*** requires wiring for power supply to be installed along the chain ***2***.

When the electromagnet ***13*** is used, it is possible to change the magnetic force according to the weight of the bicycle storage box ***3*** and to perform control in such a way that the electromagnet ***13*** of a bicycle storage box ***3*** that requires no magnetic force, i.e., no lateral or vertical motion, is not energized. Hence, the overall load is reduced to that extent.

The storage apparatus of this embodiment has a very simple construction, in which the chain ***2*** fixedly attached with the magnets ***5*** is arranged along the frame body ***1*** that encloses the three-dimensionally arranged bicycle storage boxes ***3***. Further, because adjacent bicycle storage boxes ***3*** are placed in contact with or close to each other, the available space can be used efficiently.

Furthermore, in this embodiment the storage apparatus as a whole occupies a smaller volume of space than does the conventional one, thus allowing highly efficient utilization of space. Because the apparatus is simple in structure and uses no complex components, the manufacture cost is low, widening the range of application.

The application of this storage apparatus includes not only the above-mentioned multi-tier parking lots for bicycles but also multi-story parking lots for automobiles, distribution warehouses, factories and offices, and even home kitchens and shelves for books and files.

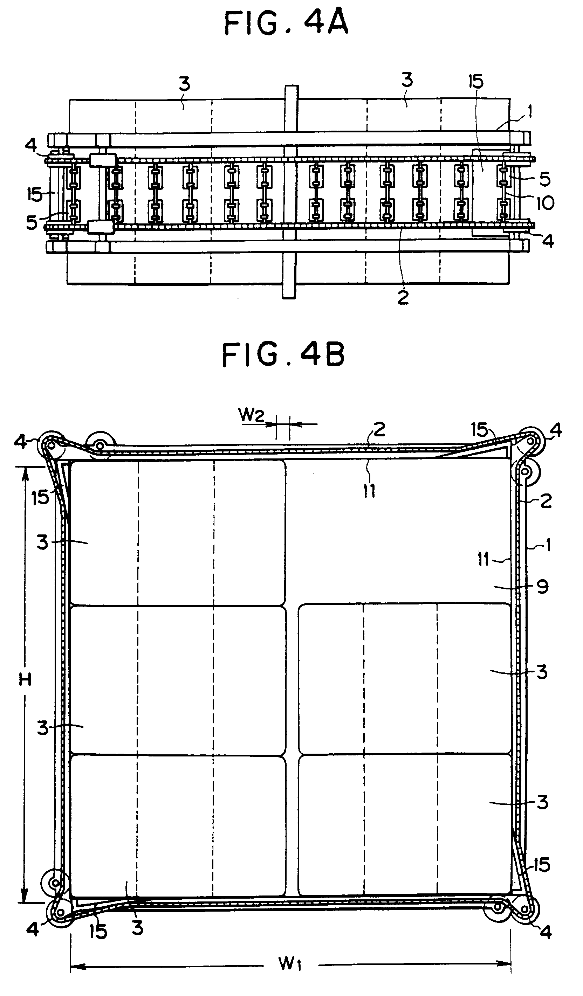

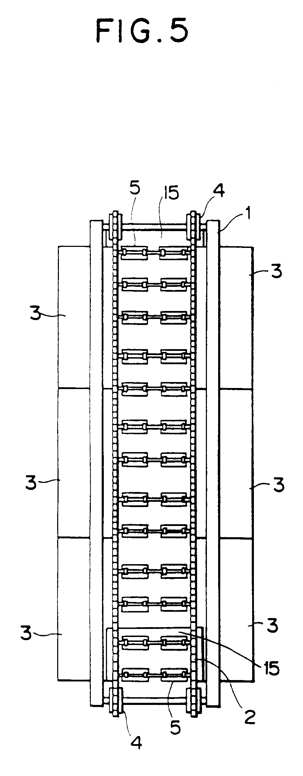

Figure 4 and 5 show a second embodiment of this invention. In this embodiment, at the four corners of the frame body ***1*** there are installed demagnetizing members ***15*** shaped like a letter V in side view to ensure smooth movement of the magnets ***5*** at the corners of the storage apparatus with a small force.

With this construction, when the magnets ***5*** reach the corners of the frame body ***1***, they are forcibly separated from the wall surface of the bicycle storage box ***3*** by the action of the demagnetizing member. After the magnetic attraction is nullified, these magnets ***5*** again adhere to the ceiling of the bicycle storage box ***3***, causing the top box ***3*** on the left side to move into the space ***9***.

In this embodiment, too, as in the first embodiment, the magnets ***5*** used in the storage apparatus need to have a load carrying capacity compatible with the weight of the bicycle storage box ***3***. For an increased load carrying capacity, the magnetic attraction may be increased or the area of the magnet ***5*** facing the bicycle storage box ***3*** may be enlarged. In this case, because the demagnetizing members ***15*** are installed at the corners of the frame body ***1***, the magnets ***5*** are easily separated at these corners from the bicycle storage boxes ***3***, assuring a smooth movement of the boxes.

Thus, in the storage apparatus of the above embodiment, the attraction between the magnets ***5*** and the bicycle storage boxes ***3*** can be smoothly nullified at the corners of the frame body ***1*** by the demagnetizing members ***15***, allowing the bicycle storage boxes ***3*** to be transferred with a small force.

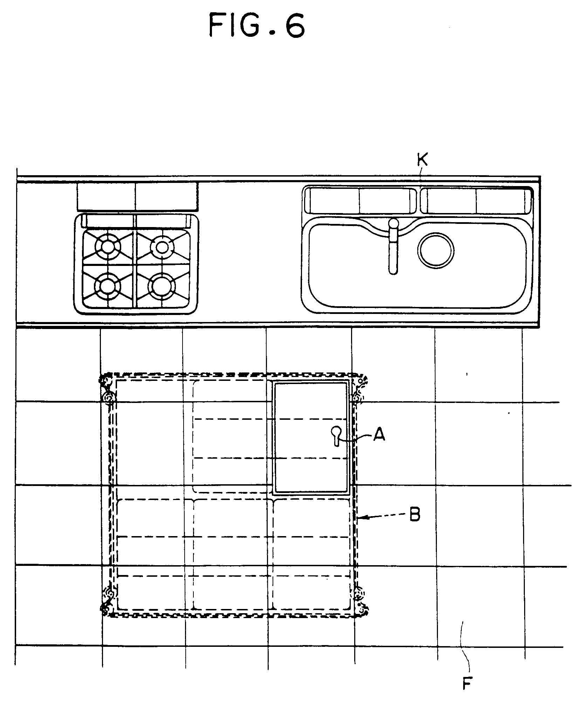

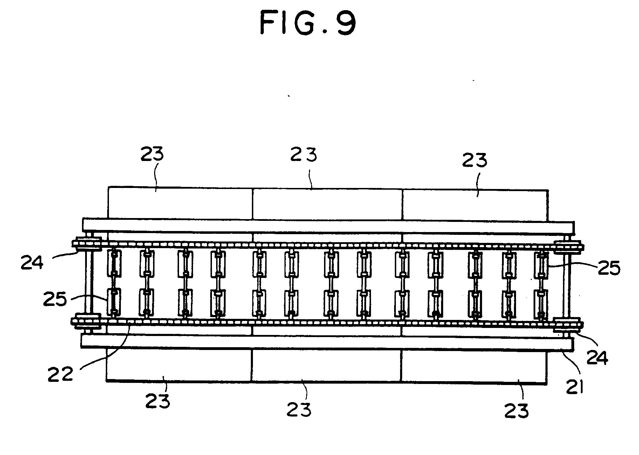

Figure 6 through 9 represent a case where this invention is applied to the under-the-floor storage apparatus. The under-the-floor storage apparatus ***B*** is installed in a under-the-floor space ***D*** formed between a floor ***F*** of a kitchen on which a dresser ***K*** is installed and a foundation ***C***. Reference symbol ***A*** represents a cover for opening and closing the opening in the floor ***F***. The cover ***A*** is rotatably supported by a hinge (not shown). The opening has an area almost equal to a plan-view area of one storage box described later.

The under-the-floor storage apparatus ***B*** comprises a frame body ***21*** which is rectangular in shape. Inside the frame body ***21*** is installed a rail ***31*** running along the frame body ***21***.

Inside the frame body ***21***, there are two rows of storage boxes ***23*** virtually U-shaped in cross section. Each row consists of three or two storage boxes. In the two-box row there is a space ***29*** large enough to accommodate one storage box ***23***. A chain ***22*** is laid along the frame body ***1***.

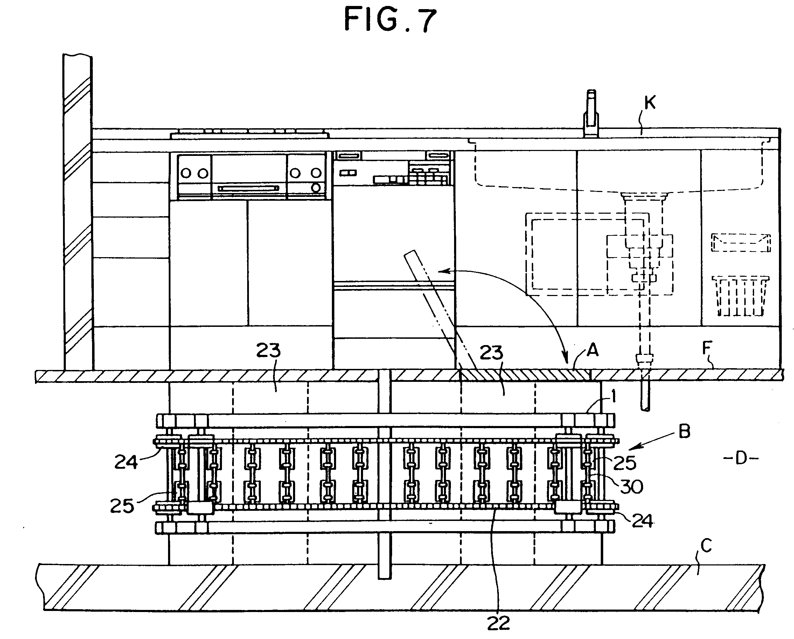

The chain ***22*** consists, as shown in Figure 6 and 7, of two rows of chain spaced a specified distance from each other. At the left- and right-hand side of the top and bottom surfaces of the frame body ***21***, there are provided sprockets ***24*** that change the direction of motion of the chain ***22*** and ensure correct transport of the chain ***22*** along the frame body ***21***.

Further, in this embodiment, platelike magnets ***25*** (permanent magnets) are secured to the end portions of horizontal connecting bars ***30*** that connect the two rows of chain. The connecting bars ***30*** are arranged over the entire length of the chain ***22*** at specified intervals.

On the outer circumferential surface of the storage boxes ***23***, there are arranged magnetic plates ***27*** made of magnetic material such as iron at positions facing the magnets ***25***. It is of course possible to form the entire outer circumferential surface of the storage box ***23*** as an iron plate.

The magnet ***25*** is fixed to the chain ***22*** by bolts, as in the first embodiment (see Figure 3). At each corner of a surface of the magnet ***25*** that is close to the magnetic plate ***27***, a rotating member such as a ball is partly embedded in the magnet ***25*** (Figure 3). The similar construction also applies to the magnetic plates ***27*** and the magnets ***25*** provided to the top and bottom surfaces of the storage box ***23*** that face the chain ***22***.

As in the first embodiment, the rotating member, though effective for assuring a smooth sliding between the magnet ***25*** and the magnetic plate ***27***, is not necessarily a requirement in terms of construction. A smooth film may be used in place of the rotating member. The gap dimension formed between the surface of the magnet ***25*** and the magnetic plate ***27*** as well as the selection of material is similar to that of the first embodiment.

Inside the frame body ***21*** are provided a total of five storage boxes ***23*** and a space ***29*** equal in volume to one storage box ***23***. The storage boxes ***23*** are kept independent of each other. Hence, as long as the space ***29*** is formed in the direction of movement of a storage box ***23***, the storage box ***23*** can be moved forward and backward or laterally toward the space ***29*** by moving the chain ***22***.

Next, how the storage boxes ***23*** are moved in the above-mentioned under-the-floor storage apparatus is explained. First, a move switch is selected from a switch ***SW*** provided on a cabinet of the dresser ***K*** and consisting of a stop switch and a move switch and is pressed to activate a drive source (not shown) such as motor to start the chain ***22***. Then, all the magnets ***25*** fixed to this chain ***22*** start to move in the horizontal direction. The magnets ***25*** attract, by magnetic force, the storage box ***23*** that they face, and the storage box ***23*** is acted upon by a force that causes the box ***23*** to move in the direction of the chain ***22*** motion.

When other storage box ***23*** lies in the direction of movement of a target storage box ***23***, the target box ***23*** cannot be moved. In this case, the magnets ***25*** with the rotating members slide over a wall surface including the surface of the magnetic plate ***27*** of the storage box ***23***. Among possible drive sources are one that moves the chain ***22*** by manual force using a force multiplying mechanism.

Suppose, for example, the space ***29*** is located at the left end of the far-side row in the frame body ***21***, as shown in Figure 6. As the chain ***22*** starts moving (in a clockwise direction), the storage box ***23*** at the left end of the near-side row is moved by the action of magnetic force toward the space ***29*** on the far side.

At this time, other storage boxes ***23*** are held immovable, so that the magnets ***25*** carried by the chain ***22*** slide through the rotating members over the wall surface of the storage boxes. When the storage box ***23*** at the left end of the near-side row is completely transferred to the space ***29***, a space ***29*** is formed where the storage box ***23*** on the left end of the near-side row was. Then, by the magnetic force of the magnets ***25***, the storage boxes ***23*** at an intermediate position and a right end of the near-side row are transferred horizontally as the chain ***22*** is driven. For a smooth horizontal movement of the storage boxes ***23***, it is preferred that ball bearings (not shown) be installed between the bottoms of the storage boxes ***23*** and the frame body. Further, by installing the demagnetizing members (not shown) used in the second embodiment at four corners of the frame body ***21***, it is possible to transfer the storage boxes ***23*** smoothly with a small force.

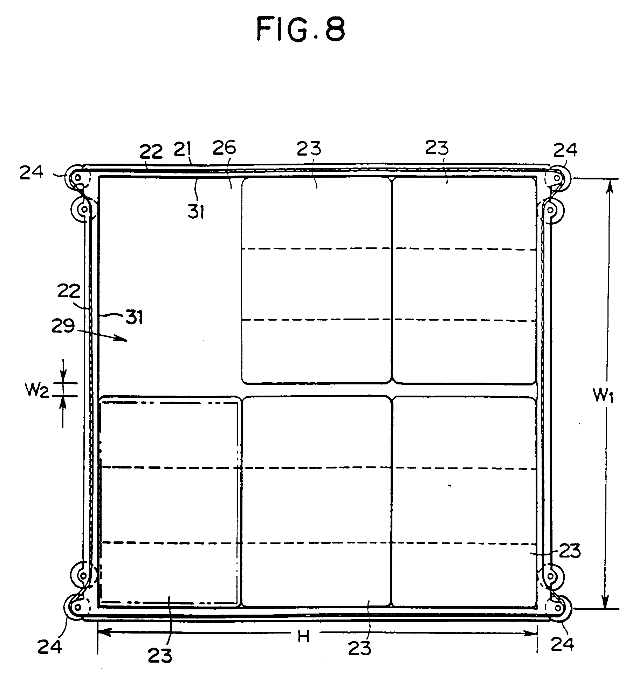

In this way, a space is formed at one location after another and the storage box ***23*** is moved to fill the space. The storage boxes ***23*** are circulated in the frame body ***21*** along with the chain ***22***. In Figure 8, they are moved in the following order.
(1) A storage box ***23*** at the left end of the nearside row moves to the space ***29*** at the left end of the far-side row.
(2) Storage boxes ***23*** at the intermediate position and the right end of the near-side row move to the left of the near-side row.
(3) A storage box ***23*** at the right end of the far-side row moves to the right end of the near-side row.
(4) The storage box ***23*** of (1) that has moved to the left end of the far-side row moves towards the right of the far-side row, together with the box 23 of the intermediate position.

The above sequence of motion is repeated. With the above operation performed by driving the chain ***22***, the desired storage box ***23*** can be moved to the opening for taking goods out of and putting them into the storage box ***23***.

The lateral length ***H*** of the frame body ***21*** is equal to the width of the storage box ***23*** times 3 (boxes) plus the small width of the frame body ***21***. The longitudinal length ***W1*** is equal to the longitudinal length of the storage box ***23*** times 2 (rows) plus the small width of the frame body ***21*** and a gap ***W2*** between the bicycle storage boxes ***23***. The apparatus as a whole has no redundant space.

In this embodiment the under-the-floor storage apparatus as a whole occupies a smaller volume of space than does the conventional one, thus allowing highly efficient utilization of a space under the floor. Because the apparatus is simple in structure and uses no complex components, the manufacture cost is reduced. Further, only one storage box ***23*** is allowed to face the opening in the floor at one time, as in the conventional apparatus, so that objects can be taken out of or put into the storage box easily. Another advantage is that because the storage boxes ***23*** can be moved as required, stored objects can be sorted out according to kinds, making it possible to easily store things in orderly manner.

In the above embodiments, the storage apparatus employs a construction in which a chain fitted with magnets is arranged around the frame body that encloses the storage boxes and in which the storage boxes are moved by driving the chain. This simple construction reduces the manufacture cost and the volume of space occupied by the entire storage apparatus, improving the utilization of the available space.

When the demagnetizing members to nullify the attraction between the magnets and the storage box are installed at the corners of the frame body, the storage boxes can be moved smoothly with a small force, facilitating manual operation and, in the case of electric operation, permitting the use of a small motor. This in turn reduces cost.

## Claims

1. Storage apparatus comprising:
a rectangular frame body (1, 21);
storage boxes (3, 23) movable relative to the frame body along a path which follows the periphery of the frame body, at least three such storage boxes being installed in the frame body;
a flexible drive member (2, 22) positioned adjacent to the storage boxes;
a space (9, 29) provided at a location along the path and capable of accommodating one storage box (3, 23); and
drive means for driving the drive member (2, 22) to move the storage boxes (3, 23) along the path;
characterized in that the flexible drive member (2, 22) is endless and is positioned along the frame body (1, 21), and in that the apparatus further comprises:
magnets (5, 25) fixed to the drive member (2, 22) so as to face the storage boxes (3, 23), the magnets being arranged in such a way that at least one magnet is adjacent to each storage box; and
magnetic components (7, 27) fixed to the storage boxes (3, 23) so as to face the magnets (5, 25) so that the magnetic components and the magnets may attract each other.

2. Storage apparatus according to claim 1, wherein rotatable members (8) are incorporated in the magnets (5, 25) so as to face the storage boxes (3, 23).

3. Storage apparatus according to claim 1 or 2, wherein the magnets (5, 25) and/or the magnetic components (7, 27) are electromagnets (13).

4. Storage apparatus according to any one of claims 1 to 3, wherein demagnetizing members (15) are arranged at the four corners of the frame body (1, 21) for separating the magnets (5, 25) from the magnetic components (7, 27).

5. Storage apparatus according to any one of claims 1 to 4, wherein the storage apparatus is a parking lot for bicycles, a parking lot for automobiles, a distribution warehouse, a goods storage system or an under-the-floor storage apparatus.

6. Storage apparatus according to claim 1, wherein the magnetic components (7, 27) are magnetic plates.

7. Storage apparatus according to any one of claims 1 to 6, wherein the flexible endless drive member (2, 22) is a chain.

8. Storage apparatus according to claim 7, further comprising sprockets (4, 24) arranged at the four corners of the frame body (1. 21) for guiding the chain (2, 22) around the corners.

## Patentansprüche

1. Lagereinrichtung mit:
einem rechteckigen Rahmenteil (1, 21);
Lagerkästen (3, 23), die relativ zu dem Rahmenteil entlang einer Bahn bewegbar sind, welche dem Umfang des Rahmenteiles folgt, wobei mindestens drei solcher Lagerkästen in dem Rahmenteil eingebaut sind;
einem flexiblen Antriebsteil (2, 22), welches neben den Lagerkästen angeordnet ist;
einem Raum (9, 29), der an einem Ort längs der Bahn vorgesehen und in der Lage ist, einen Lagerkasten (3, 23) aufzunehmen; und
Antriebsmitteln für den Antrieb des Antriebsteiles (2, 22), um die Lagerkästen (3, 23) entlang der Bahn zu bewegen;
dadurch gekennzeichnet, daß das flexible Antriebsteil (2, 22) endlos und längs des Rahmenteils (1, 21) angeordnet ist und daß die Einrichtung ferner aufweist:
Magneten (5, 25), die an dem Antriebsteil (2, 22) befestigt sind, um den Lagerkästen (3, 23) zugewandt zu sein, wobei die Magneten auf solche Weise angeordnet sind, daß mindestens ein Magnet sich neben jedem Lagerkasten befindet; und
magnetische Bauteile (7, 27) an den Lagerkästen (3, 23) derart befestigt sind, daß sie den Magneten (5, 25) zugewandt sind, so daß die magnetischen Bauteile und die Magnete einander anziehen können.

2. Lagereinrichtung nach Anspruch 1, wobei drehbare Teile (8) in den Magneten (5, 25) eingebaut sind, um den Lagerkästen (3, 23) zugewandt zu sein.

3. Lagereinrichtung nach Anspruch 1 oder 2, wobei die Magneten (5, 25) und/oder die magnetischen Bauteile (7, 27) Elektromagneten (13) sind.

4. Lagereinrichtung nach einem der Ansprüche 1 bis 3, wobei Entmagnetisierungsteile (15) an den vier Ecken des Rahmenteiles (1, 21) für das Trennen der Magneten (5, 25) von den magnetischen Bauteilen (7,27) angeordnet sind.

5. Lagereinrichtung nach einem der Ansprüche 1 bis 4, wobei die Lagereinrichtung ein Parkplatz ist für Fahrräder, ein Parkplatz für Autos, ein Verteilungsspeicher, ein Warenlagersystem oder eine Unterbodenlagereinrichtung.

6. Lagereinrichtung nach Anspruch 1, wobei die magnetischen Bauteile (7, 27) magnetische Platten sind.

7. Lagereinrichtung nach einem der Ansprüche 1 bis 6, wobei das flexible, endlose Antriebsteil (2, 22) eine Kette ist.

8. Lagereinrichtung nach Anspruch 7, die ferner Kettenzahnräder (4, 24) aufweist, welche an den vier Ecken des Rahmenteiles (1, 21) für das Führen der Kette (2, 22) um die Ecke herum angeordnet sind.

## Revendications

1. Appareil d'entreposage comprenant :
un corps de châssis rectangulaire (1, 21) ;
des caissons d'entreposage (3, 23) adaptés à être déplacés relativement au corps de châssis le long d'une trajectoire qui suit la périphérie du corps de châssis, au moins trois de ces caissons d'entreposage étant installés dans le corps de châssis ;
un organe d'entraînement souple (2, 22) positionné adjacent aux caissons d'entreposage ;
un espace (9, 29) situé à un emplacement le long de la trajectoire et adapté à loger un caisson d'entreposage (3, 23) ; et
un moyen de commande pour commander l'organe d'entraînement (2, 22) afin de déplacer les caissons d'entreposage (3, 23) le long de la trajectoire ;
caractérisé en ce que l'organe d'entraînement souple (2, 22) est sans fin et est positionné le long du corps de châssis (1, 21), et en ce que l'appareil comprend, en outre, :
des aimants (5, 25) fixés à l'organe d'entraînement (2, 22) de manière à donner sur les caissons d'entreposage (3, 23), les aimants étant agencés de manière qu'au moins un aimant soit adjacent à chaque caisson d'entreposage ; et
des éléments magnétiques (7, 27) fixés aux caissons d'entreposage (3, 23) de manière à donner sur les aimants (5, 25) de manière que les éléments magnétiques et les aimants puissent s'attirer.

2. Appareil d'entreposage selon la revendication 1, dans lequel des organes rotatifs (8) sont logés dans les aimants (5, 25) de manière à donner sur les caissons d'entreposage (3, 23).

3. Appareil d'entreposage selon la revendication 1 ou 2, dans lequel les aimants (5, 25) et/ou les éléments magnétiques (7, 27) sont des électroaimants (13).

4. Appareil d'entreposage selon l'une quelconque des revendications 1 à 3, dans lequel des organes de désaimantation (15) sont situés aux quatre coins du corps de châssis (1, 21) pour séparer les aimants (5, 25) des éléments magnétiques (7, 27).

5. Appareil d'entreposage selon l'une quelconque des revendications 1 à 4, dans lequel l'appareil d'entreposage est un parc de stationnement pour bicyclettes, un parc de stationnement pour automobiles, un entrepôt de distribution, un système d'entreposage de marchandises ou un appareil d'entreposage sous le plancher.

6. Appareil d'entreposage selon la revendication 1, dans lequel les éléments magnétiques (7, 27) sont des plaques magnétiques.

7. Appareil d'entreposage selon l'une quelconque des revendications 1 à 6, dans lequel l'organe d'entraînement souple sans fin (2, 22) est une chaîne.

8. Appareil d'entreposage selon la revendication 7, comprenant, en outre, des pignons (4, 24) situés aux quatre coins du corps de châssis (1, 21) pour guider la chaîne (2, 22) autour des coins.
